# EUROPEAN PATENT APPLICATION

(11) **EP 4 568 309 A1**
(43) Date of publication of application: **11.06.2025**
(21) Application number: 22953690.9
(22) Date of filing: 05.08.2022
(51) Int. Cl.: H04W 8/24

(54) **POSITIONING METHOD, AND APPARATUS, DEVICE AND STORAGE MEDIUM**

(71) Applicant: Beijing Xiaomi Mobile Software Co., Ltd., Beijing 100085 (CN)
(72) Inventor: WU, Jinhua, Beijing 100085 (CN)
(74) Representative: Stöckeler, Ferdinand
(86) International application number: PCT/CN2022/110709
(87) International publication number: WO 2024/026890

(57) **Abstract**

Provided in the present disclosure are a positioning method, and an apparatus, a device and a storage medium. The method comprises: receiving a position determination request, which is sent by an access and mobility management function (AMF) network element, the position determination request comprising an identifier of a terminal device and a positioning capability or preference supported by the terminal device, and determining a positioning method for the terminal device on the basis of the positioning capability or preference supported by the terminal device. Provided in the present disclosure is a low-power-consumption and/or high-precision positioning method, such that low-power-consumption and/or high-precision positioning in a mobile communication network is realized.

## Description

### TECHNICAL FIELD

The present disclosure relates to the field of communication technology, and specifically to a positioning method, a positioning apparatus, a device, and a storage medium.

### BACKGROUND

In a mobile communication network, a terminal is usually needed to be positioned so as to know a positioning location of the terminal. At present, how to achieve low power and/or high accuracy positioning in the mobile communication network is an urgent technical problem to be solved.

### SUMMARY

The embodiments of the present disclosure provide a positioning method, a positioning apparatus, a device, and a storage medium so as to achieve low power and/or high accuracy positioning (LPHAP) in a mobile communication network.

According to a first aspect of the embodiments of the present disclosure, a positioning method is provided, executed by a location management function (LMF) network element, including:
receiving a determine location request sent by an access and mobility management function (AMF) network element, in which the determine location request includes an identifier of a terminal and a positioning capability or preference supported by the terminal; and
determining a positioning method of the terminal based on the positioning capability or preference supported by the terminal.

In the present disclosure, the positioning method is provided. The LMF network element may receive the determine location request sent by the AMF network element, in which the determine location request includes the identifier of the terminal and the positioning capability or preference supported by the terminal. Then, the LMF network element may determine the positioning method of the terminal based on the positioning capability or preference supported by the terminal. In an embodiment of the present disclosure, the positioning capability or preference supported by the terminal may specifically be an LPHAP capability or preference, which mainly includes any one of a low power positioning capability or preference, a high accuracy positioning capability or preference, or a low power and high accuracy positioning capability or preference. Based on this, when the LMF network element determines that the terminal is needed to be positioned, the LMF network element may determine a low power positioning method, a high accuracy positioning method, or a low power and high accuracy positioning method based on the positioning capability or preference supported by the terminal, so as to achieve low power positioning, high accuracy positioning, or low power and high accuracy positioning. Therefore, an LPHAP method is provided in the present disclosure to achieve the LPHAP in the mobile communication network.

According to a second aspect of the embodiments of the present disclosure, a positioning method is provided, executed by an AMF network element, including:
in response to determining that a terminal is needed to be positioned, sending a determine location request to an LMF network element, in which the determine location request includes an identifier of the terminal and a positioning capability or preference supported by the terminal.

According to a third aspect of the embodiments of the present disclosure, a positioning method is provided, executed by a terminal, including:
sending a registration request to an AMF network element, in which the registration request includes an identifier of the terminal and a positioning capability or preference supported by the terminal.

According to a fourth aspect of the embodiments of the present disclosure, a communication device is provided, configured in an LMF network element, including:
a transceiver module, configured to receive a determine location request sent by an AMF network element, in which the determine location request includes an identifier of a terminal and a positioning capability or preference supported by the terminal; and
a processing module, configured to determine a positioning method of the terminal based on the positioning capability or preference supported by the terminal.

According to a fifth aspect of the embodiments of the present disclosure, a communication device is provided, configured in an AMF network element, including:
a transceiver module, configured to in response to determining that a terminal is needed to be positioned, send a determine location request to an LMF network element, in which the determine location request includes an identifier of the terminal and a positioning capability or preference supported by the terminal.

According to a sixth aspect of the embodiments of the present disclosure, a communication device is provided, configured in a terminal, including:
a transceiver module, configured to send a registration request to an AMF network element, in which the registration request includes an identifier of the terminal and a positioning capability or preference supported by the terminal.

According to a seventh aspect of the embodiments of the present disclosure, a communication device including a processor is provided. When a computer program in a memory is called by the processor, the method in the above first aspect is implemented.

According to an eighth aspect of the embodiments of the present disclosure, a communication device including a processor is provided. When a computer program in a memory is called by the processor, the method in the above second aspect is implemented.

According to a ninth aspect of the embodiments of the present disclosure, a communication device including a processor is provided. When a computer program in a memory is called by the processor, the method in the above third aspect is implemented.

According to a tenth aspect of the embodiments of the present disclosure, a communication device is provided, including a processor and a memory for storing a computer program. When the computer program stored in the memory is executed by the processor, the communication device is caused to implement the method in the above first aspect.

According to an eleventh aspect of the embodiments of the present disclosure, a communication device is provided, including a processor and a memory for storing a computer program. When the computer program stored in the memory is executed by the processor, the communication device is caused to implement the method in the above second aspect.

According to a twelfth aspect of the embodiments of the present disclosure, a communication device is provided, including a processor and a memory for storing a computer program. When the computer program stored in the memory is executed by the processor, the communication device is caused to implement the method in the above third aspect.

According to a thirteen aspect of the embodiments of the present disclosure, a communication device including a processor and an interface circuit is provided, in which the interface circuit is configured to receive code instructions and transmit the code instructions to the processor; and the processor is configured to run the code instructions to cause the communication device to implement the method in the above first aspect.

According to a fourteenth aspect of the embodiments of the present disclosure, a communication device including a processor and an interface circuit is provided, in which the interface circuit is configured to receive code instructions and transmit the code instructions to the processor; and the processor is configured to run the code instructions to cause the communication device to implement the method in the above second aspect.

According to a fifteenth aspect of the embodiments of the present disclosure, a communication device including a processor and an interface circuit is provided, in which the interface circuit is configured to receive code instructions and transmit the code instructions to the processor; and the processor is configured to run the code instructions to cause the communication device to implement the method in the above third aspect.

According to a sixteenth aspect of the embodiments of the present disclosure, a communication system is provided. The system includes the communication device in the fourth aspect to the communication device in the sixth aspect, or the communication device in the seventh aspect to the communication device in the ninth aspect, or the communication device in the tenth aspect to the communication device in the twelfth aspect, or the communication device in the thirteenth aspect to the communication device in the fifteenth aspect.

According to a seventeenth aspect of the embodiments of the present disclosure, a computer readable storage medium is provided, for storing instructions used by the above network device and/or by the above terminal. When the instructions are executed, the network device is caused to implement the method in the above first aspect, and/or the terminal is caused to implement the method in the above second aspect, and/or, the terminal is caused to implement the method in the above third aspect.

According to an eighteenth aspect of the embodiments of the present disclosure, a computer program product including a computer program is provided. When the computer program product is running on a computer, the computer is caused to implement the method of any one of the above first aspect to the above third aspect.

According to a nineteenth aspect of the embodiments of the present disclosure, a chip system is provided. The chip system includes at least one processor and interface, configured to support a network device to perform the functions in the method in the first aspect, and/or, configured to support a terminal to perform the functions in the method in the second aspect, and/or, configured to support a terminal to perform the functions in the method in the third aspect, for example, to determine or process at least one of data and information in the above methods. In one possible design, the chip system also includes a memory for saving computer programs and data necessary for a source secondary node. The chip system may be consisted of a chip, or may include a chip and other discrete devices.

According to a twentieth aspect of the embodiments of the present disclosure, a communication system is provided, including an AMF network element, an LMF network element, and a gateway mobile location centre (GMLC);
in which the AMF network element is configured to receive a registration request sent by a terminal and complete a registration of the terminal based on the registration request, in which the registration request includes an identifier of the terminal and a positioning capability or preference supported by the terminal;
the GMLC is configured to receive a positioning request sent by a location request device, in which the positioning request includes the identifier of the terminal;
the GMLC is further configured to send a location provide positioning information request, in which the location provide positioning information request includes the identifier of the terminal;
the AMF network element is further configured to receive the location provide positioning information request and send a determine location request, in which the determine location request include the identifier of the terminal and the positioning capability or preference supported by the terminal;
the LMF network element is configured to receive the determine location request, determine a positioning method of the terminal based on the positioning capability or preference supported by the terminal in the determine location request, and send the positioning method of the terminal;
the AMF network element is further configured to receive the positioning method of the terminal and send the positioning method of the terminal to the terminal or a base station to determine a positioning location of the terminal;
the AMF network element is further configured to send the positioning location of the terminal; and
the GMLC is further configured to receive the positioning location of the terminal and send the positioning location of the terminal to the location request device.

According to a twenty-first aspect of the embodiments of the present disclosure, a computer program is provided. When the computer program is executed by a computer, the computer is caused to implement the method of any one of the above first aspect to the above third aspect.

### BRIEF DESCRIPTION OF THE DRAWINGS

The above and/or other aspects and advantages of the embodiments of the present disclosure will become apparent and more readily appreciated from the following descriptions made with reference to the accompanying drawings.
FIG. 1 is a schematic diagram of a 5G service network architecture according to the embodiments of the present disclosure.
FIG. 2 is a flowchart of a positioning method according to another embodiment of the present disclosure.
FIG. 3 is a flowchart of a positioning method according to an embodiment of the present disclosure.
FIG. 4 is a flowchart of a positioning method according to another embodiment of the present disclosure.
FIGs. 5a to 5c are interaction diagrams of a positioning method according to the embodiments of the present disclosure.
FIG. 6 is a flowchart of a positioning method according to another embodiment of the present disclosure.
FIG. 7 is a flowchart of a positioning method according to another embodiment of the present disclosure.
FIG. 8 is a flowchart of a positioning method according to another embodiment of the present disclosure.
FIG. 9 is a flowchart of a positioning method according to another embodiment of the present disclosure.
FIG. 10 is a flowchart of a positioning method according to another embodiment of the present disclosure.
FIG. 11 is a flowchart of a positioning method according to another embodiment of the present disclosure.
FIG. 12 is a block diagram of a communication apparatus according to an embodiment of the present disclosure.
FIG. 13 is a block diagram of a communication apparatus according to another embodiment of the present disclosure.
FIG. 14 is a block diagram of a communication apparatus according to another embodiment of the present disclosure.
FIG. 15 is a block diagram of a communication system according to an embodiment of the present disclosure.
FIG. 16 is a block diagram of a communication device according to an embodiment of the present disclosure.
FIG. 17 is a block diagram of a chip according to an embodiment of the present disclosure.

### DETAILED DESCRIPTION

Reference will now be made in detail to exemplary embodiments, examples of which are shown in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to embodiments of the present disclosure as recited in the appended claims.

The terms used in the embodiments of the present disclosure are solely for the purpose of describing a particular embodiment and are not intended to limit the embodiments of the nrecent disclosure. The terms "a/an" and "the" in the singular form used in the embodiments and claims of the present disclosure are also intended to include the plural form, unless the context clearly indicates other meaning. It may also be understood that the term "and/or" as used herein refers to any or all possible combinations of one or more associated listed items.

It may be understood that although the terms first, second, third, etc. may be used to describe various information in the embodiments of the present disclosure, such information should not be limited to these terms. These terms are used only to distinguish information in the same type from one another. For example, without departing from the scope of embodiments of the present disclosure, the first information may also be referred to as the second information, and similarly, the second information may be referred to as the first information. Depending on the context, words "if" and "in case that" used here may be interpreted as "when", "while", or "in response to determining...".

The embodiments of the present disclosure are described in detail below. Examples of the embodiments are shown in the accompanying drawings, in which the same or similar labels throughout the present disclosure represent the same or similar elements or elements having the same or similar functions. The following embodiments with reference to the accompanying drawings are exemplary and are intended to explain the present disclosure, but should not be construed as a limitation to the present disclosure.

For convenience of understanding, terms in the present disclosure are first introduced.

### 1. Access and Mobility Management Function (AMF) Network Element

The AMF network element performs registration, connectivity, reachability, and mobility management. It provides a session management message transmission channel for a terminal and a session management function (SMF) network element, and provides authentication and authorization functions for the terminal when assessing to the network. Furthermore, it is an access point between a terminal and a control plane of a wireless core network.

### 2. Gateway Mobile Location Centre (GMLC)

The GMLC is a first node for an external location program to access a global system for mobile communications (GSM) public land mobile network (PLMN), which performs registration and authorization checks, and requests routing information from a home location register (HLR). One PLMN may have a plurality of GMLCs.

### 3. Location Management Function (LMF) Network Element

A link management function entity is used to manage links and resources among network elements in an access network.

In order to better understand a method for determining a location in the embodiments of the present disclosure, a communication system applicable to the embodiments of the present disclosure is described below.

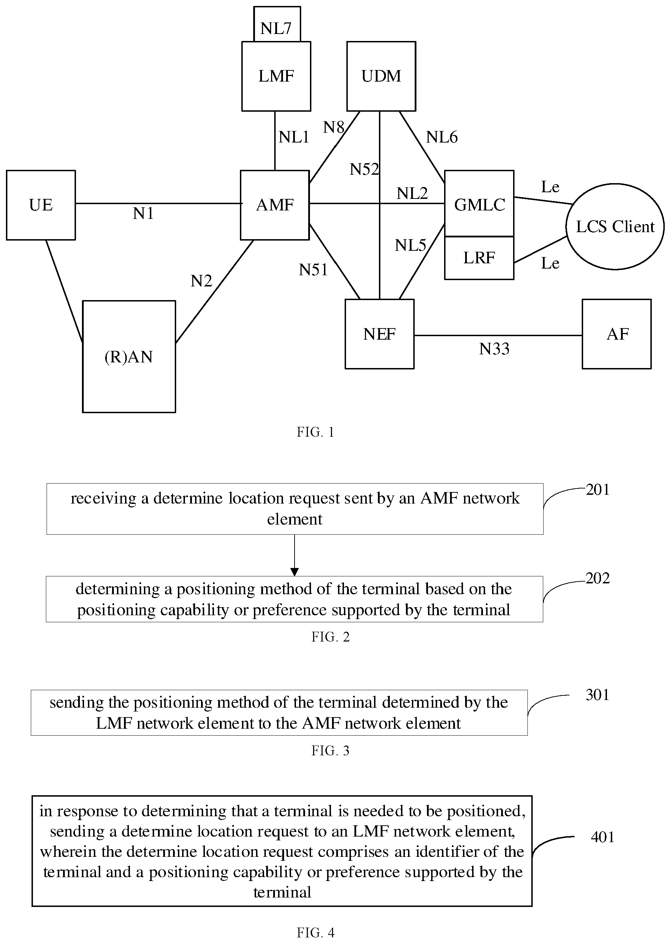

A 5G service network architecture may abstract functions of network elements into a plurality of services. Please refer to FIG. 1, which is a schematic diagram of the 5G service network architecture according to the embodiments of the present disclosure. FIG. 1 shows network elements included in the 5G service network architecture and interfaces used for communication among the network elements.

It may be understood that the communication system in the embodiments of the present disclosure is intended to illustrate a technical solution in the embodiments of the present disclosure more clearly, and does not constitute a limitation of the technical solution in the embodiments of the present disclosure. Those skilled in the art may well know that the technical solution in the embodiments of the present disclosure is equally applicable to similar technical problems, with the evolution of a system architecture and the emergence of a new service scene.

In the embodiments of the present disclosure, phrases "obtain... from" or "obtain... sent by" may be understood as "receive... from" or "receive... sent by".

Furthermore, in the embodiments of the present disclosure, the phrase "based on" may be understood as "according to" or "considering".

The positioning method, the positioning apparatus, the device, and storage medium in the embodiments of the present disclosure are described in detail below with reference to the attached drawings.

FIG. 2 is a flowchart of a positioning method according to the embodiments of the present disclosure. The positioning method is executed by an LMF network element. As shown in FIG. 2, the positioning method may include the following steps 201 to 202.

At step 201, a determine location request sent by an AMF network element is received.

In an embodiment of the present disclosure, the determine location request includes an identifier of a terminal and a positioning capability or preference supported by the terminal.

The identifier of the terminal may be an identifier that uniquely identifies the terminal, for example, the identifier of the terminal may include at least one of:
a subscriber permanent identifier (SUPI);
a subscription concealed identifier (SUCI);
a generic public subscription identifier (GPSI);
a globally unique temporary user equipment (UE) identity (GUTI); or
a paging early indication (PEI).

Further, in an embodiment of the present disclosure, the above positioning capability or preference supported by the terminal may include any one of:
a first positioning capability or preference;
a second positioning capability or preference; or
a third positioning capability or preference.

It needs to be noted that in an embodiment of the disclosure, a terminal that supports the first positioning capability or preference is capable of supporting a first positioning method, and power needed by the first positioning method is less than a first threshold, that is, the first positioning method needs low power. A terminal that supports the second positioning capability or preference is capable of supporting a second positioning method, and positioning accuracy of the second positioning method is greater than a second threshold, that is, the second positioning method has high positioning accuracy. A terminal that supports the third positioning capability or preference is capable of supporting a third positioning method, and power needed by the third positioning method is less than the first threshold and positioning accuracy of the third positioning method is greater than the second threshold, that is, the first positioning method needs low power and has high positioning accuracy.

It is known from the above content that in an embodiment of the present disclosure, the first positioning capability or preference, the second positioning capability or preference, the third positioning capability or preference may belong to the LPHAP capability. The first positioning capability or preference is specifically the low power positioning capability or preference; the second positioning capability or preference is specifically the high accuracy positioning capability or preference; and the third positioning capability or preference is specifically the low power and high accuracy positioning capability or preference.

At step 202, a positioning method of the terminal is determined based on the positioning capability or preference supported by the terminal.

In an embodiment of the present disclosure, the positioning method of the terminal determined by an LMF is specifically a positioning method that matches the positioning capability or preference supported by the terminal.

Specifically, in an embodiment of the present disclosure, the first positioning capability or preference matches the first positioning method; the second positioning capability or preference matches the second positioning method; and the third positioning capability or preference matches the third positioning method.

In addition, the LMF network element store a matching relationship between the above positioning capabilities or preferences and positioning methods. Based on this, after the LMF network element receives the determine location request sent by the AMF network element, a positioning method that matches the positioning capability or preference supported by the terminal included in the determine location request may be determined based on the matching relationship stored on the LMF network element.

Exemplarily, assuming that a positioning capability or preference of the terminal included in the determine location request is the first positioning capability or preference, the LMF network element may determine that the positioning method that matches the positioning capability or preference supported by the terminal is the first positioning method based on the above matching relationship.

In addition, it needs to be noted that in an embodiment of the present disclosure, each positioning method may specify interaction steps in a specific positioning process when the each positioning method is used to position the terminal. Different positioning methods correspond to different interaction steps in a positioning process. The steps in the positioning interaction procedure corresponding to the first positioning method needs low power. The accuracy of a positioning location determined by the steps in the positioning interaction procedure corresponding to the second positioning method is high. The steps in the positioning interaction procedure corresponding to the third positioning method needs low power and the accuracy of the determined positioning location is high.

Therefore, in the present disclosure, when the LMF network element determines the positioning method that matches the positioning capability or preference supported by the terminal based on the positioning capability or preference supported by the terminal, it may specifically determine a low power positioning method, a high accuracy positioning method, or a low power and high accuracy positioning method based on the positioning capability or preference supported by the terminal, so as to achieve low power positioning, high accuracy positioning, or low power and high accuracy positioning.

In summary, in the positioning method according to the embodiments of the present disclosure, the LMF network element may receive the determine location request sent by the AMF network element, in which the determine location request includes the identifier of the terminal and the positioning capability or preference supported by the terminal; and the LMF network element may determine the positioning method of the terminal based on the positioning capability or preference supported by the terminal. In an embodiment of the present disclosure, the positioning capability or preference supported by the terminal may specifically be the LPHAP capability or preference, which mainly includes any one of the low power positioning capability or preference, the high accuracy positioning capability or preference, or the low power and high accuracy positioning capability or preference. Based on this, when the LMF network element determines that the terminal is needed to be positioned, the LMF network element may determine the low power positioning method, the high accuracy positioning method, or the low power and high accuracy positioning method based on the positioning capability or preference supported by the terminal, so as to achieve low power positioning, high accuracy positioning, or low power and high accuracy positioning. Therefore, the LPHAP method is provided in the present disclosure to achieve the LPHAP in the mobile communication network.

FIG. 3 is a flowchart of a positioning method according to the embodiments of the present disclosure. The positioning method is executed by an LMF network element. As shown in FIG. 3, the positioning method may include the following step 301.

At step 301, the positioning method of the terminal determined by the LMF network element is sent to the AMF network element.

The step 301 may be performed after steps of the above embodiments shown in the FIG. 2.

In an embodiment of the present disclosure, the LMF network element sends to the AMF network element, the positioning method of the terminal determined by the LMF network element, so that the AMF network element may send the positioning method of the terminal to a base station and/or the terminal for corresponding low power positioning, high accuracy positioning, or low power and high accuracy positioning.

In summary, in the positioning method according to the embodiments of the present disclosure, the LMF network element may receive the determine location request sent by the AMF network element, in which the determine location request includes the identifier of the terminal and the positioning capability or preference supported by the terminal; and the LMF network element may determine the positioning method of the terminal based on the positioning capability or preference supported by the terminal. In an embodiment of the present disclosure, the positioning capability or preference supported by the terminal may specifically be the LPHAP capability or preference, which mainly includes any one of the low power positioning capability or preference, the high accuracy positioning capability or preference, or the low power and high accuracy positioning capability or preference. Based on this, when the LMF network element determines that the terminal is needed to be positioned, the LMF network element may determine the low power positioning method, the high accuracy positioning method, or the low power and high accuracy positioning method based on the positioning capability or preference supported by the terminal, so as to achieve low power positioning, high accuracy positioning, or low power and high accuracy positioning. Therefore, the LPHAP method is provided in the present disclosure to achieve the LPHAP in the mobile communication network.

FIG. 4 is a flowchart of a positioning method according to the embodiments of the present disclosure. The positioning method is executed by an AMF network element. As shown in FIG. 4, the positioning method may include the following step 401.

At step 401, in response to determining that a terminal is needed to be positioned, a determine location request is sent to an LMF network element, in which the determine location request includes an identifier of the terminal and a positioning capability or preference supported by the terminal.

In an embodiment of the present disclosure, in response to determining that the AMF network element receives a request for positioning from another device, and the request includes the identifier of the terminal, the AMF network element may determine that the terminal is needed to be positioned (for details about this part, please refer to descriptions of subsequent embodiments) at the current moment. Then, the AMF network element may send to the LMF network element, the determine location request that carries the identifier of the terminal that is needed to be positioned and the positioning capability or preference of the terminal that is needed to be positioned, so that the LMF network element may determine a specific terminal that is needed to be positioned based on the identifier of the terminal in the determine location request. Furthermore, the low power positioning method, the high accuracy positioning method, or the low power and high accuracy positioning method is selected based on the positioning capability or preference of the terminal in the determine location request, so as to achieve low power positioning, high accuracy positioning, or low power and high accuracy positioning.

Exemplarily, the determine location request may be an Nlmf_Location_DetermineLocation request.

In addition, a detailed execution method for step 403 is described in subsequent embodiments.

In summary, in the positioning method according to the embodiments of the present disclosure, the AMF network element may receive the registration request sent by the terminal, in which the registration request includes the identifier of the terminal and the positioning capability supported by the terminal, and the positioning capability supported by the terminal includes any one of the first positioning capability, the second positioning capability, or the third positioning capability. The terminal that supports the first positioning capability is capable of supporting the first positioning method, and power needed by the first positioning method is less than the first threshold; the terminal that supports the second positioning capability is capable of supporting the second positioning method, and positioning accuracy of the second positioning method is greater than the second threshold; and the terminal that supports the third positioning capability is capable of supporting the third positioning method, and power needed by the third positioning method is less than the first threshold and positioning accuracy of the third positioning method is greater than the second threshold. Then, the AMF network element may complete the registration of the terminal based on the registration request. When the AMF network element determines that the terminal is needed to be positioned, the AMF network element may determine the positioning location of the terminal based on the positioning capability supported by the terminal. It may be seen that when the terminal is registered in the AMF network element, the terminal may report the positioning capability (that is, the LPHAP capability, including any one of the low power positioning capability, the high accuracy positioning capability, or the low power and high accuracy positioning capability) supported by the terminal. Then, when the AMF network element determines that the terminal is needed to be positioned, the AMF network element may obtain the positioning location of the terminal with the low power, the high accuracy, or the low power and the high accuracy based on the positioning capability of the terminal. Therefore, the LPHAP method is provided in the present disclosure to achieve the LPHAP in the mobile communication network.

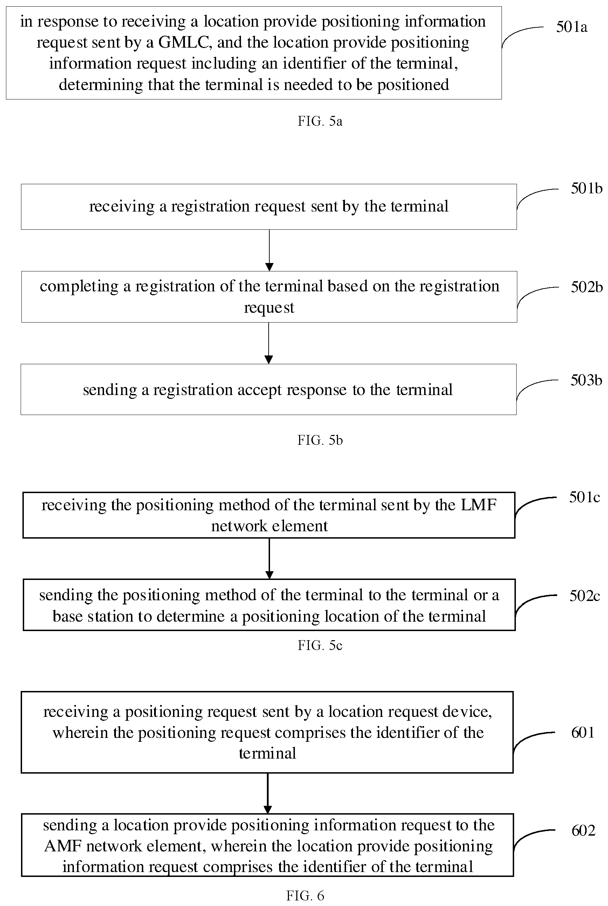

FIG. 5a is a flowchart of a positioning method according to the embodiments of the present disclosure. The positioning method is executed by an AMF network element. As shown in FIG. 5a, the positioning method may include the following step 501a.

At step 501a, in response to receiving a location provide positioning information request sent by a GMLC, and the location provide positioning information request including an identifier of the terminal, it is determined that the terminal is needed to be positioned.

In an embodiment of the present disclosure, the location provide positioning information request is specifically sent to the AMF network element after the GMLC receives a positioning request sent by a location request device and the GMLC authorizes the positioning request.

The location request device may specifically be a location service (LCS) client or an application function (AF). In addition, the positioning request is specifically sent to the GMLC by the location request device when the location request device requests to position the terminal. The positioning request may include the identifier of the terminal that the location request device wants to position, the required quality of service (QoS) , and other attribute parameters. In addition to the identifier of the terminal, the location provide positioning information request sent by the GMLC may also further include the required QoS and other attribute parameters. For information about the required QoS and other attribute parameters, please refer to the description in the related art.

In an embodiment of the present disclosure, "AMF receives a location provide positioning information request sent by a GMLC, in which the location provide positioning information request includes an identifier of the terminal" may be specifically understood as: the GMLC invokes the Namf_Location_ProvidePositioningInfo service operation towards the AMF network element to request the current location of the terminal. At this point, the AMF network element may determine that the terminal is needed to be positioned.

In summary, in the positioning method according to the embodiments of the present disclosure, the AMF network element may receive the registration request sent by the terminal, in which the registration request includes the identifier of the terminal and the positioning capability supported by the terminal, and the positioning capability supported by the terminal includes any one of the first positioning capability, the second positioning capability, or the third positioning capability. The terminal that supports the first positioning capability is capable of supporting the first positioning method, and power needed by the first positioning method is less than the first threshold; the terminal that supports the second positioning capability is capable of supporting the second positioning method, and positioning accuracy of the second positioning method is greater than the second threshold; and the terminal that supports the third positioning capability is capable of supporting the third positioning method, and power needed by the third positioning method is less than the first threshold and positioning accuracy of the third positioning method is greater than the second threshold. Then, the AMF network element may complete the registration of the terminal based on the registration request. When the AMF network element determines that the terminal is needed to be positioned, the AMF network element may determine the positioning location of the terminal based on the positioning capability supported by the terminal. It may be seen that when the terminal is registered in the AMF network element, the terminal may report the positioning capability (that is, the LPHAP capability, including any one of the low power positioning capability, the high accuracy positioning capability, or the low power and high accuracy positioning capability) supported by the terminal. Then, when the AMF network element determines that the terminal is needed to be positioned, the AMF network element may obtain the positioning location of the terminal with the low power, the high accuracy, or the low power and the high accuracy based on the positioning capability of the terminal. Therefore, the LPHAP method is provided in the present disclosure to achieve the LPHAP in the mobile communication network.

FIG. 5b is a flowchart of a positioning method according to the embodiments of the present disclosure. The positioning method is executed by an AMF network element. As shown in FIG. 5b, the positioning method may include the following steps 501b, 502b, and 503b.

At step 501b, a registration request sent by the terminal is received.

Steps of embodiments corresponding to the FIG. 5b may be performed before the step in the embodiment corresponding to the FIG. 5a.

In an embodiment of the present disclosure, the registration request may include the identifier of the terminal and the positioning capability or preference supported by the terminal.

The identifier of the terminal may be an identifier that uniquely identifies the terminal, for example, the identifier of the terminal may include at least one of:
an SUPI;
an SUCI;
a GPSI;
a GUTI; or
a PEI.

Further, in an embodiment of the present disclosure, the above positioning capability or preference supported by the terminal may include any one of:
a first positioning capability or preference;
a second positioning capability or preference; or
a third positioning capability or preference.

It needs to be noted that in an embodiment of the disclosure, a terminal that supports the first positioning capability or preference is capable of supporting a first positioning method, and power needed by the first positioning method is less than a first threshold, that is, the first positioning method needs low power. A terminal that supports the second positioning capability or preference is capable of supporting a second positioning method, and positioning accuracy of the second positioning method is greater than a second threshold, that is, the second positioning method has high positioning accuracy. A terminal that supports the third positioning capability or preference is capable of supporting a third positioning method, and power needed by the third positioning method is less than the first threshold and positioning accuracy of the third positioning method is greater than the second threshold, that is, the first positioning method needs low power and has high positioning accuracy.

It is known from the above content that in an embodiment of the present disclosure, the first positioning capability or preference, the second positioning capability or preference, the third positioning capability or preference shall belong to the LPHAP capability. The first positioning capability or preference is specifically the low power positioning capability or preference; the second positioning capability or preference is specifically the high accuracy positioning capability or preference; and the third positioning capability or preference is specifically the low power and high accuracy positioning capability or preference.

Further, in an embodiment of the present disclosure, the registration request may be sent by the terminal to a core network device via a radio access network (RAN)/the base station.

It needs to be noted that, in an embodiment of the present disclosure, the registration request may also include a registration type and/or a security parameter corresponding to the terminal. For an introduction of the registration type and the security parameter, please refer to the description in the related art.

At step 502b, a registration of the terminal is completed based on the registration request.

At step 503b, a registration accept response is sent to the terminal.

In an embodiment of the present disclosure, after the AMF network element completes the registration of the terminal, the AMF network element may send the registration accept response to the terminal to notify the terminal that the registration has been completed.

The AMF network element may send the registration accept response to the terminal via the RAN/a next generation node B (gNB).

In summary, in the positioning method according to the embodiments of the present disclosure, the AMF network element may receive the registration request sent by the terminal, in which the registration request includes the identifier of the terminal and the positioning capability supported by the terminal, and the positioning capability supported by the terminal includes any one of the first positioning capability, the second positioning capability, or the third positioning capability. The terminal that supports the first positioning capability is capable of supporting the first positioning method, and power needed by the first positioning method is less than the first threshold; the terminal that supports the second positioning capability is capable of supporting the second positioning method, and positioning accuracy of the second positioning method is greater than the second threshold; and the terminal that supports the third positioning capability is capable of supporting the third positioning method, and power needed by the third positioning method is less than the first threshold and positioning accuracy of the third positioning method is greater than the second threshold. Then, the AMF network element may complete the registration of the terminal based on the registration request. When the AMF network element determines that the terminal is needed to be positioned, the AMF network element may determine the positioning location of the terminal based on the positioning capability supported by the terminal. It may be seen that when the terminal is registered in the AMF network element, the terminal may report the positioning capability (that is, the LPHAP capability, including any one of the low power positioning capability, the high accuracy positioning capability, or the low power and high accuracy positioning capability) supported by the terminal. Then, when the AMF network element determines that the terminal is needed to be positioned, the AMF network element may obtain the positioning location of the terminal with the low power, the high accuracy, or the low power and the high accuracy based on the positioning capability of the terminal. Therefore, the LPHAP method is provided in the present disclosure to achieve the LPHAP in the mobile communication network.

FIG. 5c is a flowchart of a positioning method according to the embodiments of the present disclosure. The positioning method is executed by an AMF network element. As shown in FIG. 5c, the positioning method may include the following steps 501c and 502c.

At step 501c, the positioning method of the terminal sent by the LMF network element is received.

Steps of embodiments corresponding to the FIG. 5c may be performed after the step in the embodiment corresponding to the FIG. 5a.

In an embodiment of the present disclosure, the positioning method of the terminal is specifically determined by the LMF network element based on the positioning capability or preference supported by the terminal. For a specific determining method, please refer to the descriptions in the above embodiments.

At step 502c, the positioning method of the terminal is sent to the terminal or a base station to determine a positioning location of the terminal.

In an embodiment of the present disclosure, the LMF network element sends the positioning method to the terminal or the base station so that the terminal or the base station may perform positioning based on the positioning method.

In summary, in the positioning method according to the embodiments of the present disclosure, the AMF network element may receive the registration request sent by the terminal, in which the registration request includes the identifier of the terminal and the positioning capability supported by the terminal, and the positioning capability supported by the terminal includes any one of the first positioning capability, the second positioning capability, or the third positioning capability. The terminal that supports the first positioning capability is capable of supporting the first positioning method, and power needed by the first positioning method is less than the first threshold; the terminal that supports the second positioning capability is capable of supporting the second positioning method, and positioning accuracy of the second positioning method is greater than the second threshold; and the terminal that supports the third positioning capability is capable of supporting the third positioning method, and power needed by the third positioning method is less than the first threshold and positioning accuracy of the third positioning method is greater than the second threshold. Then, the AMF network element may complete the registration of the terminal based on the registration request. When the AMF network element determines that the terminal is needed to be positioned, the AMF network element may determine the positioning location of the terminal based on the positioning capability supported by the terminal. It may be seen that when the terminal is registered in the AMF network element, the terminal may report the positioning capability (that is, the LPHAP capability, including any one of the low power positioning capability, the high accuracy positioning capability, or the low power and high accuracy positioning capability) supported by the terminal. Then, when the AMF network element determines that the terminal is needed to be positioned, the AMF network element may obtain the positioning location of the terminal with the low power, the high accuracy, or the low power and the high accuracy based on the positioning capability of the terminal. Therefore, the LPHAP method is provided in the present disclosure to achieve the LPHAP in the mobile communication network.

FIG. 6 is a flowchart of a positioning method according to the embodiments of the present disclosure. The positioning method is executed by a GMLC. As shown in FIG. 6, the positioning method may include the following steps 601 to 602.

At step 601, a positioning request sent by a location request device is received, in which the positioning request includes the identifier of the terminal.

At step 602, a location provide positioning information request is sent to the AMF network element, in which the location provide positioning information request includes the identifier of the terminal.

For detailed descriptions of steps 601 to 602, please refer to the above embodiments.

In summary, in the positioning method according to the embodiments of the present disclosure, the LMF network element may receive the determine location request sent by the AMF network element, in which the determine location request includes the identifier of the terminal and the positioning capability or preference supported by the terminal; and the LMF network element may determine the positioning method of the terminal based on the positioning capability or preference supported by the terminal. In an embodiment of the present disclosure, the positioning capability or preference supported by the terminal may specifically be the LPHAP capability or preference, which mainly includes any one of the low power positioning capability or preference, the high accuracy positioning capability or preference, or the low power and high accuracy positioning capability or preference. Based on this, when the LMF network element determines that the terminal is needed to be positioned, the LMF network element may determine the low power positioning method, the high accuracy positioning method, or the low power and high accuracy positioning method based on the positioning capability or preference supported by the terminal, so as to achieve low power positioning, high accuracy positioning, or low power and high accuracy positioning. Therefore, the LPHAP method is provided in the present disclosure to achieve the LPHAP in the mobile communication network.

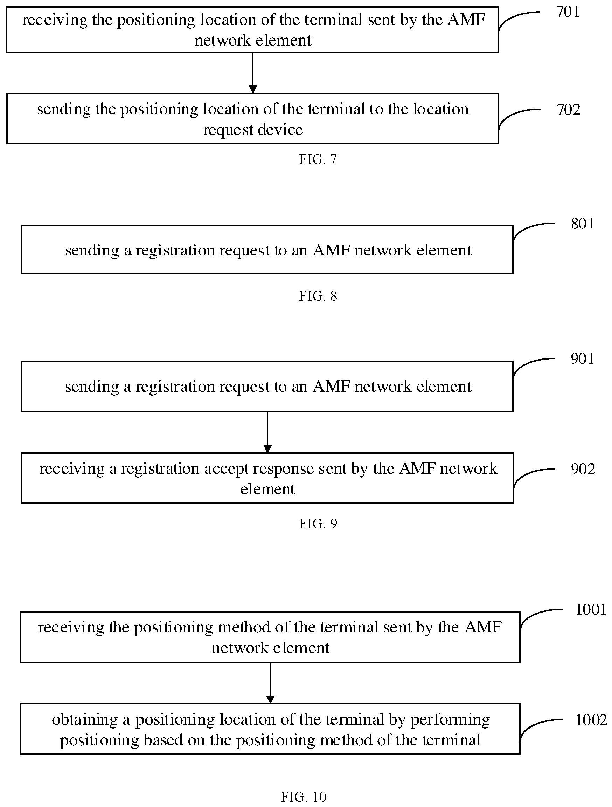

FIG. 7 is a flowchart of a positioning method according to the embodiments of the present disclosure. The positioning method is executed by a GMLC. As shown in FIG. 7, the positioning method may include the following steps 701 to 702.

At step 701, the positioning location of the terminal sent by an AMF network element is received.

At step 702, the positioning location of the terminal is sent to the location request device.

For detailed descriptions of steps 701 to 702, please refer to the above embodiments.

In summary, in the positioning method according to the embodiments of the present disclosure, the LMF network element may receive the determine location request sent by the AMF network element, in which the determine location request includes the identifier of the terminal and the positioning capability or preference supported by the terminal; and the LMF network element may determine the positioning method of the terminal based on the positioning capability or preference supported by the terminal. In an embodiment of the present disclosure, the positioning capability or preference supported by the terminal may specifically be the LPHAP capability or preference, which mainly includes any one of the low power positioning capability or preference, the high accuracy positioning capability or preference, or the low power and high accuracy positioning capability or preference. Based on this, when the LMF network element determines that the terminal is needed to be positioned, the LMF network element may determine the low power positioning method, the high accuracy positioning method, or the low power and high accuracy positioning method based on the positioning capability or preference supported by the terminal, so as to achieve low power positioning, high accuracy positioning, or low power and high accuracy positioning. Therefore, the LPHAP method is provided in the present disclosure to achieve the LPHAP in the mobile communication network.

FIG. 8 is a flowchart of a positioning method according to the embodiments of the present disclosure. The positioning method is executed by a terminal. As shown in FIG. 8, the positioning method may include the following step 801.

At step 801, a registration request is sent to an AMF network element.

The registration request includes an identifier of the terminal and a positioning capability or preference supported by the terminal, in which the positioning capability or preference supported by the terminal includes any one of a first positioning capability or preference, a second positioning capability or preference, or a third positioning capability or preference; in which a terminal that supports the first positioning capability or preference is capable of supporting a first positioning method, and power needed by the first positioning method is less than a first threshold; a terminal that supports the second positioning capability or preference is capable of supporting a second positioning method, and positioning accuracy of the second positioning method is greater than a second threshold; and a terminal that supports the third positioning capability or preference is capable of supporting a third positioning method, and power needed by the third positioning method is less than the first threshold and positioning accuracy of the third positioning method is greater than the second threshold.

For a detailed description of step 801, please refer to the above embodiments.

In summary, in the positioning method according to the embodiments of the present disclosure, the LMF network element may receive the determine location request sent by the AMF network element, in which the determine location request includes the identifier of the terminal and the positioning capability or preference supported by the terminal; and the LMF network element may determine the positioning method of the terminal based on the positioning capability or preference supported by the terminal. In an embodiment of the present disclosure, the positioning capability or preference supported by the terminal may specifically be the LPHAP capability or preference, which mainly includes any one of the low power positioning capability or preference, the high accuracy positioning capability or preference, or the low power and high accuracy positioning capability or preference. Based on this, when the LMF network element determines that the terminal is needed to be positioned, the LMF network element may determine the low power positioning method, the high accuracy positioning method, or the low power and high accuracy positioning method based on the positioning capability or preference supported by the terminal, so as to achieve low power positioning, high accuracy positioning, or low power and high accuracy positioning. Therefore, the LPHAP method is provided in the present disclosure to achieve the LPHAP in the mobile communication network.

FIG. 9 is a flowchart of a positioning method according to the embodiments of the present disclosure. The positioning method is executed by a terminal. As shown in FIG. 9, the positioning method may include the following steps 901 to 902.

At step 901, a registration request is sent to an AMF network element.

The registration request includes an identifier of the terminal and a positioning capability or preference supported by the terminal, in which the positioning capability or preference supported by the terminal includes any one of a first positioning capability or preference, a second positioning capability or preference, or a third positioning capability or preference; in which a terminal that supports the first positioning capability or preference is capable of supporting a first positioning method, and power needed by the first positioning method is less than a first threshold; a terminal that supports the second positioning capability or preference is capable of supporting a second positioning method, and positioning accuracy of the second positioning method is greater than a second threshold; and a terminal that supports the third positioning capability or preference is capable of supporting a third positioning method, and power needed by the third positioning method is less than the first threshold and positioning accuracy of the third positioning method is greater than the second threshold.

For a detailed description of step 901, please refer to the above embodiments.

At step 902, a registration accept response sent by the AMF network element is received.

In summary, in the positioning method according to the embodiments of the present disclosure, the LMF network element may receive the determine location request sent by the AMF network element, in which the determine location request includes the identifier of the terminal and the positioning capability or preference supported by the terminal; and the LMF network element may determine the positioning method of the terminal based on the positioning capability or preference supported by the terminal. In an embodiment of the present disclosure, the positioning capability or preference supported by the terminal may specifically be the LPHAP capability or preference, which mainly includes any one of the low power positioning capability or preference, the high accuracy positioning capability or preference, or the low power and high accuracy positioning capability or preference. Based on this, when the LMF network element determines that the terminal is needed to be positioned, the LMF network element may determine the low power positioning method, the high accuracy positioning method, or the low power and high accuracy positioning method based on the positioning capability or preference supported by the terminal, so as to achieve low power positioning, high accuracy positioning, or low power and high accuracy positioning. Therefore, the LPHAP method is provided in the present disclosure to achieve the LPHAP in the mobile communication network.

FIG. 10 is a flowchart of a positioning method according to the embodiments of the present disclosure. The positioning method is executed by a terminal. As shown in FIG. 10, the positioning method may include the following steps 1001 to 1002.

At step 1001, the positioning method of the terminal sent by the AMF network element is received.

At step 1002, a positioning location of the terminal is obtained by performing positioning based on the positioning method of the terminal.

In an embodiment of the present disclosure, the positioning method sent by the AMF network element to the terminal in the above step 1002 is specifically a positioning method that matches the positioning capability or preference supported by the terminal, for example, when the positioning capability or preference supported by the terminal is the low power positioning capability or preference, the positioning method of the terminal is the first positioning method with low power needed; when the positioning capability or preference supported by the terminal is the high accuracy positioning capability or preference, the positioning method of the terminal is the second positioning method with high accuracy; and when the positioning capability or preference supported by the terminal is the low power and high accuracy positioning capability or preference, the positioning method of the terminal is the third positioning method with the low power and high accuracy. Therefore, when the terminal performs the positioning based on the positioning method, low power positioning, high accuracy positioning, or low power and high accuracy positioning may be achieved.

The terminal may perform a positioning interaction procedure with the LMF based on the positioning method that matches the positioning capability or preference supported by the terminal so as to position the terminal.

In summary, in the positioning method according to the embodiments of the present disclosure, the LMF network element may receive the determine location request sent by the AMF network element, in which the determine location request includes the identifier of the terminal and the positioning capability or preference supported by the terminal; and the LMF network element may determine the positioning method of the terminal based on the positioning capability or preference supported by the terminal. In an embodiment of the present disclosure, the positioning capability or preference supported by the terminal may specifically be the LPHAP capability or preference, which mainly includes any one of the low power positioning capability or preference, the high accuracy positioning capability or preference, or the low power and high accuracy positioning capability or preference. Based on this, when the LMF network element determines that the terminal is needed to be positioned, the LMF network element may determine the low power positioning method, the high accuracy positioning method, or the low power and high accuracy positioning method based on the positioning capability or preference supported by the terminal, so as to achieve low power positioning, high accuracy positioning, or low power and high accuracy positioning. Therefore, the LPHAP method is provided in the present disclosure to achieve the LPHAP in the mobile communication network.

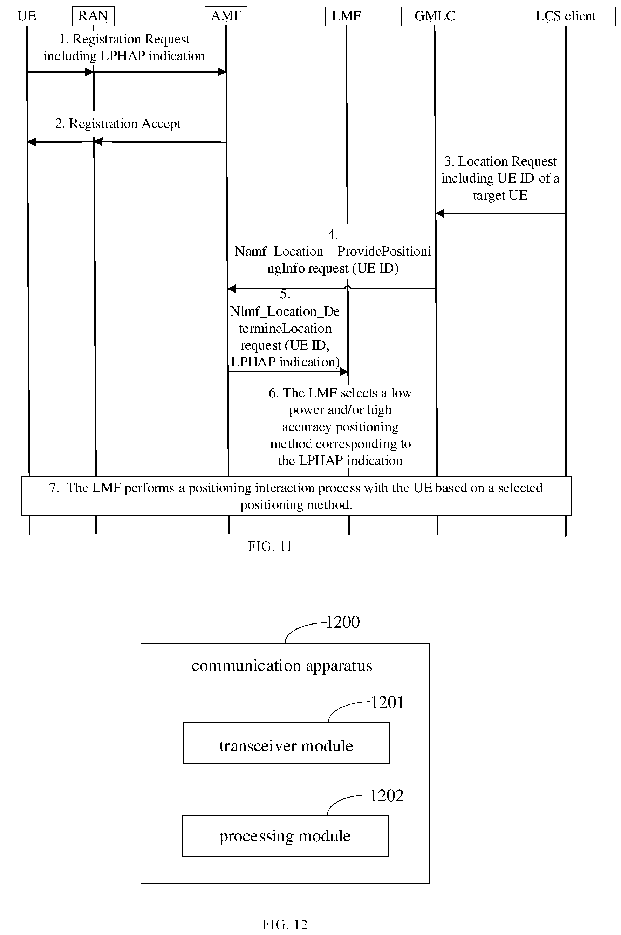

FIG. 11 is an interaction flowchart of a positioning method according to the embodiments of the present disclosure. As shown in FIG. 11, the positioning method may include the following steps.
1. The UE sends Registration Request to AMF via RAN/gNB, which includes parameters, such as Registration Type, SUPI or 5G-GUTI or PEI, Security parameters, etc. The UE may indicate its capability/preference of the LPHAP (i.e. the LPHAP positioning capability or preference in the above embodiments) to the AMF in the LPHAP indication of Registration Request. The LPHAP indication may be:
   a) low power (or low power consumption);
   b) high accuracy, or
   c) low power with high accuracy.
2. After authentication and authorization of the UE, the AMF sends Registration Accept to the UE via RAN/gNB to complete the Registration.
3. The LCS client sends a positioning request to the GMLC for a location for the target UE which may be identified by a UE identifier (ID) (GPSI or SUPI). The positioning request may include the required QoS and other attributes. The GMLC authorizes the LCS client for the usage of the LCS service.
4. The GMLC invokes the Namf_Location_ProvidePositioningInfo service operation towards the AMF to request the current location of the target UE. The service operation may include the UE ID (SUPI or GPSI) of the target UE, required LCS QoS, and other attributes as received or determined in step 3.
5. The AMF sends the Nlmf_Location_DetermineLocation request to the LMF, which includes the UE ID of the target UE and the LPHAP indication received in step 1.
6. The LMF considers the LPHAP indication when a positioning method of the UE is determined. The LMF selects the positioning method with low power and/or high accuracy positioning corresponding to the LPHAP indication.
7. The LMF obtains a positioning location of the target UE by performing a positioning interaction procedure with the UE based on the selected positioning method. The positioning interaction procedure may be referred to that specified in 3GPP TS 23.273 '6.1.2 5GC-MT-LR Procedure for the Commercial Location Service'.

FIG. 12 is a block diagram of a communication apparatus according to the embodiments of the present disclosure. As shown in FIG. 12, the communication apparatus may include a transceiver module and a processing module.

The transceiver module is configured to receive a determine location request sent by an AMF network element, in which the determine location request includes an identifier of a terminal and a positioning capability or preference supported by the terminal.

The processing module is configured to determine a positioning method of the terminal based on the positioning capability or preference supported by the terminal.

In summary, in the communication apparatus according to the embodiments of the present disclosure, the LMF network element may receive the determine location request sent by the AMF network element, in which the determine location request includes the identifier of the terminal and the positioning capability or preference supported by the terminal; and determine the positioning method of the terminal based on the positioning capability or preference supported by the terminal. In an embodiment of the present disclosure, the positioning capability or preference supported by the terminal may specifically be the LPHAP capability or preference, which mainly includes any one of the low power positioning capability or preference, the high accuracy positioning capability or preference, or the low power and high accuracy positioning capability or preference. Based on this, when the LMF network element determines that the terminal is needed to be positioned, the LMF network element may determine the low power positioning method, the high accuracy positioning method, or the low power and high accuracy positioning method based on the positioning capability or preference supported by the terminal, so as to achieve low power positioning, high accuracy positioning, or low power and high accuracy positioning. Therefore, the LPHAP method is provided in the present disclosure to achieve the LPHAP in the mobile communication network.

Optionally, in an embodiment of the present disclosure, the positioning capability or preference supported by the terminal includes any one of a first positioning capability or preference, a second positioning capability or preference, or a third positioning capability or preference; in which a terminal that supports the first positioning capability or preference is capable of supporting a first positioning method, and power needed by the first positioning method is less than a first threshold; a terminal that supports the second positioning capability or preference is capable of supporting a second positioning method, and positioning accuracy of the second positioning method is greater than a second threshold; and a terminal that supports the third positioning capability or preference is capable of supporting a third positioning method, and power needed by the third positioning method is less than the first threshold and positioning accuracy of the third positioning method is greater than the second threshold;
in which determining the positioning method of the terminal based on the positioning capability or preference supported by the terminal includes:
in response to the terminal supporting the first positioning capability or preference, determining the positioning method of the terminal as the first positioning method;
in response to the terminal supporting the second positioning capability or preference, determining the positioning method of the terminal as the second positioning method; and
in response to the terminal supporting the third positioning capability or preference, determining the positioning method of the terminal as the third positioning method.

Optionally, in an embodiment of the present disclosure, the communication apparatus is further configured to:
send the positioning method of the terminal determined by the LMF network element to the AMF network element.

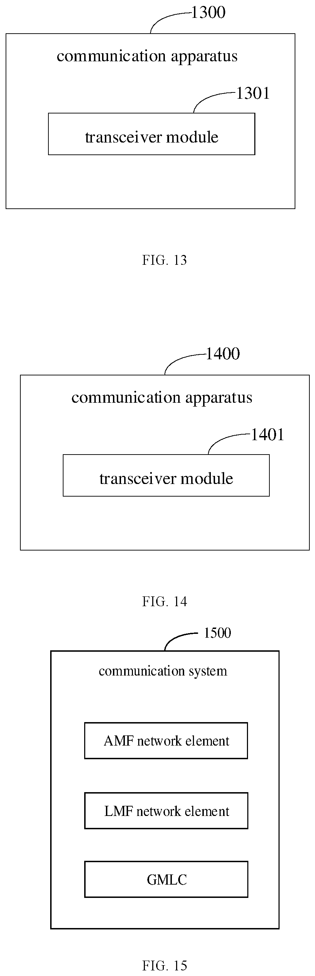

FIG. 13 is a block diagram of a communication apparatus according to the embodiments of the present disclosure. As shown in FIG. 13, the communication apparatus may include a transceiver module.

The transceiver module is configured to in response to determining that a terminal is needed to be positioned, send a determine location request to an LMF network element, in which the determine location request includes an identifier of the terminal and a positioning capability or preference supported by the terminal.

In summary, in the communication apparatus according to the embodiments of the present disclosure, the LMF network element may receive the determine location request sent by the AMF network element, in which the determine location request includes the identifier of the terminal and the positioning capability or preference supported by the terminal; and determine the positioning method of the terminal based on the positioning capability or preference supported by the terminal. In an embodiment of the present disclosure, the positioning capability or preference supported by the terminal may specifically be the LPHAP capability or preference, which mainly includes any one of the low power positioning capability or preference, the high accuracy positioning capability or preference, or the low power and high accuracy positioning capability or preference. Based on this, when the LMF network element determines that the terminal is needed to be positioned, the LMF network element may determine the low power positioning method, the high accuracy positioning method, or the low power and high accuracy positioning method based on the positioning capability or preference supported by the terminal, so as to achieve low power positioning, high accuracy positioning, or low power and high accuracy positioning. Therefore, the LPHAP method is provided in the present disclosure to achieve the LPHAP in the mobile communication network.

Optionally, in an embodiment of the present disclosure, the positioning capability or preference supported by the terminal includes any one of a first positioning capability or preference, a second positioning capability or preference, or a third positioning capability or preference; in which a terminal that supports the first positioning capability or preference is capable of supporting a first positioning method, and power needed by the first positioning method is less than a first threshold; a terminal that supports the second positioning capability or preference is capable of supporting a second positioning method, and positioning accuracy of the second positioning method is greater than a second threshold; and a terminal that supports the third positioning capability or preference is capable of supporting a third positioning method, and power needed by the third positioning method is less than the first threshold and positioning accuracy of the third positioning method is greater than the second threshold.

Optionally, in an embodiment of the present disclosure, the transceiver module is further configured to:
in response to receiving a location provide positioning information request sent by a GMLC, and the location provide positioning information request including an identifier of the terminal, determine that the terminal is needed to be positioned.

Optionally, in an embodiment of the present disclosure, the communication apparatus is further configured to:
receive a registration request sent by the terminal, in which the registration request includes the identifier of the terminal and the positioning capability or preference supported by the terminal;
complete a registration of the terminal based on the registration request; and
send a registration accept response to the terminal.

Optionally, in an embodiment of the present disclosure, the communication apparatus is further configured to:
receive the positioning method of the terminal sent by the LMF network element; and
send the positioning method of the terminal to the terminal or a base station.

Optionally, in an embodiment of the present disclosure, the identifier of the terminal includes at least one of:
an SUPI;
an SUCI;
a GPSI;
a GUTI; or
a PEI.

FIG. 14 is a block diagram of a communication apparatus according to the embodiments of the present disclosure. As shown in FIG. 14, the communication apparatus may include a transceiver module.

The transceiver module is configured to send a registration request to an AMF network element, in which the registration request includes an identifier of the terminal and a positioning capability or preference supported by the terminal.

In summary, in the communication apparatus according to the embodiments of the present disclosure, the LMF network element may receive the determine location request sent by the AMF network element, in which the determine location request includes the identifier of the terminal and the positioning capability or preference supported by the terminal; and determine the positioning method of the terminal based on the positioning capability or preference supported by the terminal. In an embodiment of the present disclosure, the positioning capability or preference supported by the terminal may specifically be the LPHAP capability or preference, which mainly includes any one of the low power positioning capability or preference, the high accuracy positioning capability or preference, or the low power and high accuracy positioning capability or preference. Based on this, when the LMF network element determines that the terminal is needed to be positioned, the LMF network element may determine the low power positioning method, the high accuracy positioning method, or the low power and high accuracy positioning method based on the positioning capability or preference supported by the terminal, so as to achieve low power positioning, high accuracy positioning, or low power and high accuracy positioning. Therefore, the LPHAP method is provided in the present disclosure to achieve the LPHAP in the mobile communication network.

Optionally, in an embodiment of the present disclosure, the positioning capability or preference supported by the terminal includes any one of a first positioning capability or preference, a second positioning capability or preference, or a third positioning capability or preference; in which a terminal that supports the first positioning capability or preference is capable of supporting a first positioning method, and power needed by the first positioning method is less than a first threshold; a terminal that supports the second positioning capability or preference is capable of supporting a second positioning method, and positioning accuracy of the second positioning method is greater than a second threshold; and a terminal that supports the third positioning capability or preference is capable of supporting a third positioning method, and power needed by the third positioning method is less than the first threshold and positioning accuracy of the third positioning method is greater than the second threshold.

Optionally, in an embodiment of the present disclosure, the communication apparatus is further configured to:
receive a registration accept response sent by the AMF network element.

Optionally, in an embodiment of the present disclosure, the communication apparatus is further configured to:
receive the positioning method of the terminal sent by the AMF network element; and
obtain a positioning location of the terminal by performing positioning based on the positioning method of the terminal.

FIG. 15 is a block diagram of a communication system according to the embodiments of the present disclosure. As shown in FIG. 15, the communication system includes an AMF network element, an LMF network element, and a GMLC.

The AMF network element is configured to receive a registration request sent by a terminal and complete a registration of the terminal based on the registration request, in which the registration request includes an identifier of the terminal and a positioning capability or preference supported by the terminal.

The GMLC is configured to receive a positioning request sent by a location request device, in which the positioning request includes the identifier of the terminal.

The GMLC is further configured to send a location provide positioning information request, in which the location provide positioning information request includes the identifier of the terminal.

The AMF network element is further configured to receive the location provide positioning information request and send a determine location request, in which the determine location request include the identifier of the terminal and the positioning capability or preference supported by the terminal.

The LMF network element is configured to receive the determine location request, determine a positioning method of the terminal based on the positioning capability or preference supported by the terminal in the determine location request, and send the positioning method of the terminal.

The AMF network element is further configured to receive the positioning method of the terminal and send the positioning method of the terminal to the terminal or a base station to determine a positioning location of the terminal.

The AMF network element is further configured to send the positioning location of the terminal.

The GMLC is further configured to receive the positioning location of the terminal and send the positioning location of the terminal to the location request device.

Optionally, the communication system may further include a terminal, in which the terminal is configured to: send a registration request to an AMF network element, in which the registration request includes an identifier of the terminal and a positioning capability or preference supported by the terminal; and receive a registration accept response sent by the AMF network element.

The terminal is further configured to receive the positioning method of the terminal sent by the AMF network element; and obtain a positioning location of the terminal by performing positioning based on the positioning method of the terminal.

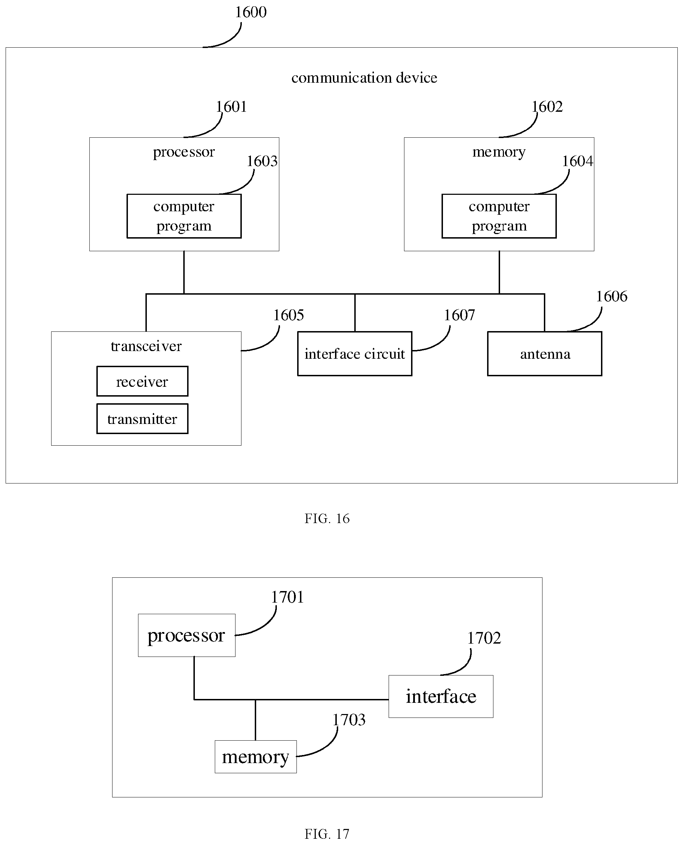

Please refer to FIG. 16, which is a block diagram of a communication device 1600 according to the embodiments of the present disclosure. The communication device 1600 may be a network device, a terminal, or a chip, a chip system, a processor, etc. supporting the network device to implement the above methods, or a chip, a system on a chip, a chip system, a processor, etc. supporting the terminal to implement the above methods. The device may be used to implement the methods in the above method embodiments, which are described in detail in the above method embodiments.

The communication device 1600 may include one or more processors 1601. The processor 1601 may be a general purpose processor or a special purpose processor. For example, it may be a baseband processor or a central processing unit. The baseband processor may be used to process communication protocols and communication data, and the central processing unit may be used to control communication devices (such as a base station, a baseband chip, a terminal, a terminal chip, a DU or a CU, etc.), to execute computer programs, and process computer program data.

Optionally, the communication device 1600 may also include one or more memories 1602 for storing a computer program 1604 and the processor 1601 executes the computer program 1604 to cause the communication device 1600 to implement the methods in the above method embodiments. Optionally, the memory 1602 may also store data. The communication device 1600 and the memory 1602 may be set separately or integrated together.

Optionally, the communication device 1600 may also include a transceiver 1605 and an antenna 1606. The transceiver 1605 may be called a transceiver unit, a transceiver machine, or a transceiver circuit, etc. to perform the transceiving function. The transceiver 1605 may include a receiver and a transmitter, in which the receiver may be called a receiving machine or a receiving circuit, etc. to perform the receiving function; the transmitter may be called a transmitting machine or a transmitting circuit, etc. to perform the transmitting function.

Optionally, the communication device 1600 may also include one or more interface circuits 1607. The interface circuit 1607 is configured to receive code instructions and transmit the code instructions to the processor 1601. When the processor 1601 executes the code instructions, the communication device 1600 is caused to implement the methods in the above method embodiments.

In an implementation, the processor 1601 may include a transceiver for performing the receiving function and the transmitting function. For example, the transceiver may be a transceiver circuit, or an interface, or an interface circuit. The transceiver circuit, the interface, or the interface circuit used to perform the receiving function and the transmitting function may be separate or integrated. The transceiver circuit, the interface, or the interface circuit may be used to read and write code/data, or the transceiver circuit, the interface, or the interface circuit may be used to transmit signals.

In an implementation, the processor 1601 may store a computer program 1603. When the computer program 1603 is running on the processor 1601, the communication device 1600 is caused to implement the method in the above method embodiments. The computer program 1603 may be solidified in the processor 1601, in which case the processor 1601 may be implemented by hardware.

In an implementation, the communication device 1600 includes a circuit that may implement the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or a terminal, but the scope of the communication device in the present disclosure is not limited to this, and the structure of the communication device may not be restricted by FIG. 16. The communication device may be an independent device or part of a larger device. For example, the communication device may be:
(1) an independent IC, or a chip, or a chip system or a subsystem;
(2) a collection including one or more ICs, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication device may be a chip or a chip system, please refer to the structural diagram of a chip in FIG. 17. The chip shown in FIG. 17 includes a processor 1701 and an interface 1702. There may be one or more processors 1701, and there may be a plurality of interfaces 1702.

Optionally, the chip also includes the memory 1703, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above functions, but such implementation shall not be regarded as going beyond the scope of the protection of the embodiments of the present disclosure.

The embodiments of the present disclosure also provide a readable storage medium for storing instructions. When the instructions are executed by a computer, the function of any one of the above method embodiments is performed.

The embodiments of the present disclosure also provide a computer program product. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or pre-defined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Pre-defined in the present disclosure may be understood as defined, pre-defined, stored, pre-stored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which may not be repeated here.

The above are only implementations of the present disclosure. However, the protection scope of the present disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A positioning method, executed by a location management function (LMF) network element, comprising:
receiving a determine location request sent by an access and mobility management function (AMF) network element, wherein the determine location request comprises an identifier of a terminal and a positioning capability or preference supported by the terminal; and
determining a positioning method of the terminal based on the positioning capability or preference supported by the terminal.

2. The method of claim 1, wherein the positioning capability or preference supported by the terminal comprises any one of a first positioning capability or preference, a second positioning capability or preference, or a third positioning capability or preference; wherein a terminal that supports the first positioning capability or preference is capable of supporting a first positioning method, and power needed by the first positioning method is less than a first threshold; a terminal that supports the second positioning capability or preference is capable of supporting a second positioning method, and positioning accuracy of the second positioning method is greater than a second threshold; and a terminal that supports the third positioning capability or preference is capable of supporting a third positioning method, and power needed by the third positioning method is less than the first threshold and positioning accuracy of the third positioning method is greater than the second threshold;
wherein determining the positioning method of the terminal based on the positioning capability or preference supported by the terminal comprises:
in response to the terminal supporting the first positioning capability or preference, determining the positioning method of the terminal as the first positioning method;
in response to the terminal supporting the second positioning capability or preference, determining the positioning method of the terminal as the second positioning method; and
in response to the terminal supporting the third positioning capability or preference, determining the positioning method of the terminal as the third positioning method.

3. The method of claim 1 or 2, further comprising:
sending the positioning method of the terminal determined by the LMF network element to the AMF network element.

4. A positioning method, executed by an access and mobility management function (AMF) network element, comprising:
in response to determining that a terminal is needed to be positioned, sending a determine location request to a location management function (LMF) network element, wherein the determine location request comprises an identifier of the terminal and a positioning capability or preference supported by the terminal.

5. The method of claim 4, wherein the positioning capability or preference supported by the terminal comprises any one of a first positioning capability or preference, a second positioning capability or preference, or a third positioning capability or preference; wherein a terminal that supports the first positioning capability or preference is capable of supporting a first positioning method, and power needed by the first positioning method is less than a first threshold; a terminal that supports the second positioning capability or preference is capable of supporting a second positioning method, and positioning accuracy of the second positioning method is greater than a second threshold; and a terminal that supports the third positioning capability or preference is capable of supporting a third positioning method, and power needed by the third positioning method is less than the first threshold and positioning accuracy of the third positioning method is greater than the second threshold.

6. The method of claim 4, wherein determining that the terminal is needed to be positioned comprises:
in response to receiving a location provide positioning information request sent by a gateway mobile location centre (GMLC), and the location provide positioning information request comprising an identifier of the terminal, determining that the terminal is needed to be positioned.

7. The method of claim 4, further comprising:
receiving a registration request sent by the terminal, wherein the registration request comprises the identifier of the terminal and the positioning capability or preference supported by the terminal;
completing a registration of the terminal based on the registration request; and
sending a registration accept response to the terminal.

8. The method of claim 4, further comprising:
receiving the positioning method of the terminal sent by the LMF network element; and
sending the positioning method of the terminal to the terminal or a base station.

9. The method of any one of claims 4 to 8, wherein the identifier of the terminal comprises at least one of:
a subscriber permanent identifier (SUPI);
a subscription concealed identifier (SUCI);
a generic public subscription identifier (GPSI);
a globally unique temporary user equipment (UE) identity (GUTI); or
a paging early indication (PEI).

10. A positioning method, executed by a terminal, comprising:
sending a registration request to an access and mobility management function (AMF) network element, wherein the registration request comprises an identifier of the terminal and a positioning capability or preference supported by the terminal.

11. The method of claim 10, wherein the positioning capability or preference supported by the terminal comprises any one of a first positioning capability or preference, a second positioning capability or preference, or a third positioning capability or preference; wherein a terminal that supports the first positioning capability or preference is capable of supporting a first positioning method, and power needed by the first positioning method is less than a first threshold; a terminal that supports the second positioning capability or preference is capable of supporting a second positioning method, and positioning accuracy of the second positioning method is greater than a second threshold; and a terminal that supports the third positioning capability or preference is capable of supporting a third positioning method, and power needed by the third positioning method is less than the first threshold and positioning accuracy of the third positioning method is greater than the second threshold.

12. The method of claim 10 or 11, further comprising:
receiving a registration accept response sent by the AMF network element.

13. The method of claim 10 or 11, further comprising:
receiving the positioning method of the terminal sent by the AMF network element; and
obtaining a positioning location of the terminal by performing positioning based on the positioning method of the terminal.

14. A communication apparatus, configured in a location management function (LMF) network element, comprising:
a transceiver module, configured to receive a determine location request sent by an access and mobility management function (AMF) network element, wherein the determine location request comprises an identifier of a terminal and a positioning capability or preference supported by the terminal; and
a processing module, configured to determine a positioning method of the terminal based on the positioning capability or preference supported by the terminal.

15. A communication apparatus, configured in an access and mobility management function (AMF) network element, comprising:
a transceiver module, configured to in response to determining that a terminal is needed to be positioned, send a determine location request to a location management function (LMF) network element, wherein the determine location request comprises an identifier of the terminal and a positioning capability or preference supported by the terminal.

16. A communication apparatus, configured in a terminal, comprising:
a transceiver module, configured to send a registration request to an access and mobility management function (AMF) network element, wherein the registration request comprises an identifier of the terminal and a positioning capability or preference supported by the terminal.

17. A communication system, comprising an access and mobility management function (AMF) network element, a location management function (LMF) network element, and a gateway mobile location centre (GMLC);
wherein the AMF network element is configured to receive a registration request sent by a terminal and complete a registration of the terminal based on the registration request, wherein the registration request comprises an identifier of the terminal and a positioning capability or preference supported by the terminal;
the GMLC is configured to receive a positioning request sent by a location request device, wherein the positioning request comprises the identifier of the terminal;
the GMLC is further configured to send a location provide positioning information request, wherein the location provide positioning information request comprises the identifier of the terminal;
the AMF network element is further configured to receive the location provide positioning information request and send a determine location request, wherein the determine location request comprise the identifier of the terminal and the positioning capability or preference supported by the terminal;
the LMF network element is configured to receive the determine location request, determine a positioning method of the terminal based on the positioning capability or preference supported by the terminal in the determine location request, and send the positioning method of the terminal;
the AMF network element is further configured to receive the positioning method of the terminal and send the positioning method of the terminal to the terminal or a base station to determine a positioning location of the terminal;
the AMF network element is further configured to send the positioning location of the terminal; and
the GMLC is further configured to receive the positioning location of the terminal and send the positioning location of the terminal to the location request device.

18. A communication device, comprising a processor and a memory for storing a computer program, wherein, when the computer program stored in the memory is executed by the processor, the communication device is caused to implement the method of any one of claims 1 to 3, or the communication device is caused to implement the method of any one of claim 4 or 9, or the communication device is caused to implement the method of any one of claims 10 to 13.

19. A computer readable storage medium for storing instructions, wherein, when the instructions are executed, the method of any one of claims 1 to 3 is implemented, or the method of any one of claims 4 to 9 is implemented, or the method of any one of claims 10 to 13 is implemented.
